# EUROPEAN PATENT APPLICATION

(11) **EP 1 236 925 A2**
(43) Date of publication of application: **04.09.2002**
(21) Application number: 02251398.0
(22) Date of filing: 28.02.2002
(51) Int. Cl.: F16F 7/09, F16F 9/32

(54) **Damper assembly**

(30) Priority: 02.03.2001 GB 0105144
(71) Applicant: Medusa International Limited, Pemberton, Wigan, Lancs WN5 8DH (GB)
(72) Inventor: Tartaglione, Donato, Ashton-in-Markerfield, Wigan WN4 9LP (GB)
(74) Representative: Kinton, Colin David

(57) **Abstract**

A damper assembly 1 is provided for use in connection with drawer-slides, and doors for cupboards. The damper assembly 1 comprises a cylinder of uniform bore 11 adapted to receive a piston 20 in sealing engagement with the bore 11 and to move axially of the bore 11, the piston 20 being provided with a piston rod 21 in sealing engagement with a bush 22 acting to close one end of the bore 11, the opposite end of the bore 11 being permanently closed. The piston 20 is preferably made from a resiliently-deformable material. The bore 11 is provided with one or more vents 13 and the assembly includes means to move the piston 20 in a direction axially opposed to a force applied thereto.

## Description

This invention relates to a damper assembly and particularly, but not exclusively, to a damper assembly for use in connection with drawerslides, doors for cupboards and the like.

Noise created by drawers and doors being shut is distracting and the slamming of drawers and doors can also lead to damage of these items. It is desirable to be able to shut doors and drawers quietly and in a controlled manner.

Previously this has been accomplished by means of a totally sealed apparatus including one or more pistons or vanes. Such devices are difficult to adjust in a predictable and controllable way.

Accordingly, the present invention provides a damper assembly comprising a cylinder of uniform bore adapted to receive a piston in sealing engagement with the bore and moveable axially of the bore, the piston being provided with a piston-rod and the piston-rod being received in sealing engagement with a bush acting to close one end of the bore, the opposite end of the bore being permanently closed, in which the piston is made from or comprises a resiliently-deformable material, the bore is provided with one or more vents and the assembly includes means to move the piston in a direction axially opposed to a force applied thereto.

The configuration of the piston is preferably such that, on inward movement relative to the bore, the piston exhibits increased frictional engagement with the bore and that, on outward movement relative to the bore, the piston exhibits reduced frictional engagement with the bore.

For example, the piston may be of generally spherical, hemispherical or bell-shaped configuration.

Alternatively, the piston may be of generally circular or annular section. The piston may, for example, may comprise two generally annular portions maintained at substantially 90° to each other. Again alternatively, the piston may be of generally Z-shaped section.

The bore is preferably of circular section. Alternatively, it may be of triangular, quadrilateral (including rectangular, square or rhombic) or hexagonal section.

In a first embodiment, the or each vent comprises a hole extending radially relative to the bore of the cylinder.

The or each vent hole may, for example, have a maximum diameter of 2.0mm and a minimum diameter of 0.2mm.

The piston may consist substantially entirely of a resiliently-deformable material, for example, a thermoplastic elastomer, a rubber or rubber-like material or a polyurethane.

Alternatively, the piston may comprise an outer layer of said resiliently-deformable material surrounding a core of a less-deformable material.

The means to move the piston in the direction axially opposed to an applied force may comprise one or more springs (e.g. helical springs).

Preferably, the piston includes one or more lip portions at its distal end relative to the piston rod, the or each lip portion being adapted, in use, to sealingly engage the bore. The or each lip portion may be integral with or discrete from the piston.

In a second embodiment, the or each vent comprises an elongate groove or like channel, extending axially internally relative to the bore.

Preferably, the or each vent groove extends over substantially the whole length of the bore.

The or each vent groove may, for example, have a maximum depth of 0.8mm and a minimum depth of 0.1mm.

In either embodiment, the springs may be replaced by one or more pairs of contact magnets.

The present invention will be illustrated, merely by way of example, in the following description and with reference to the accompanying drawings.

In the drawings (wherein like numerals denote like parts):
**Figures 1 and 2** are longitudinal sections through a damper assembly according to the first embodiment of the present invention; and
**Figures 3** is a longitudinal section through a damper assembly according to the second embodiment of the present invention.

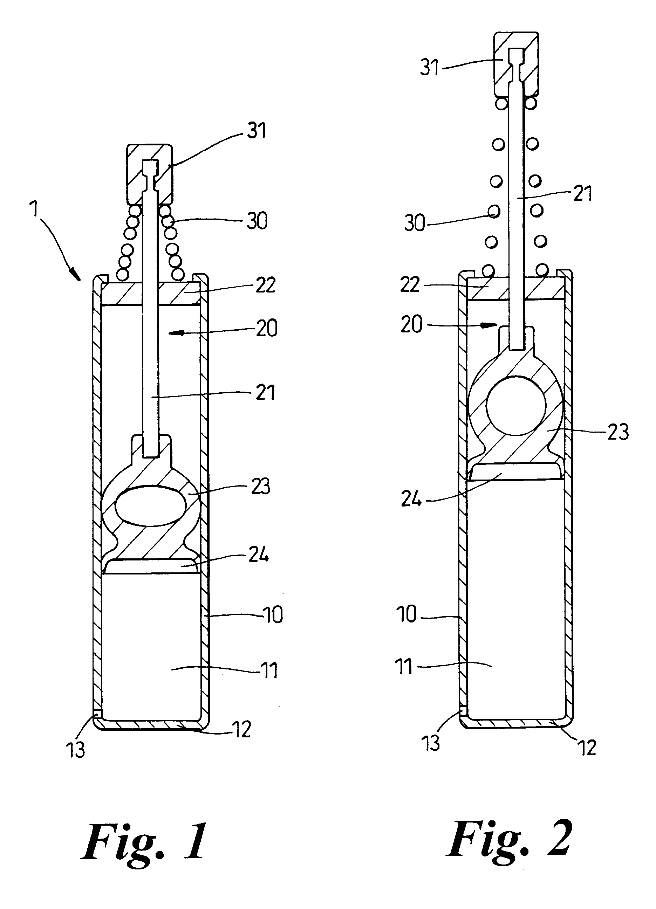

Referring to Figures 1 and 2, the damper assembly 1 comprises a cylinder 10 of uniform bore 11 adapted to receive a piston 20 in sealing engagement with the bore. The piston is provided with a piston rod 21 in sealing engagement with a bush 22 acting to close one end of the bore, the opposite end of the bore being totally sealed as shown at 12. The piston comprises a piston ring 23 of a resiliently deformable material and one or more lip portions 24 at its distal end relative to the piston rod 21. The bore is provided with one or more vents 13. A spring 30 is provided in operative association with the piston rod 21, to move the piston in a direction axially opposed to an applied force. The spring is held in place by means of a retaining cap 31, which can also act as a handle.

When a downward force is applied to the piston (as shown in Figure 1) the piston ring 23 is deformed radially outwardly to exert a frictional force on the inner wall of the cylinder 10. This frictional force is increased by further deformation of the piston ring 23 as the piston 20 pushes against the air in the bore 11 of the cylinder. The air becomes compressed and escapes through the vent hole 13. When the downward stroke is completed the spring 30, which is now under compression, exerts an axial force opposite to the previously applied force and causes upward movement of the piston. This upward movement deforms the piston ring 23 radially inwardly, reducing the frictional force on the inner wall of the cylinder 10. The piston ring 23 is further deformed radially inwardly by the reduced pressure generated in the bore 11 as air is entering the bore 11 through the vent hole 13. This further reduces the frictional force and allows the piston 20 to travel to its "rest" position.

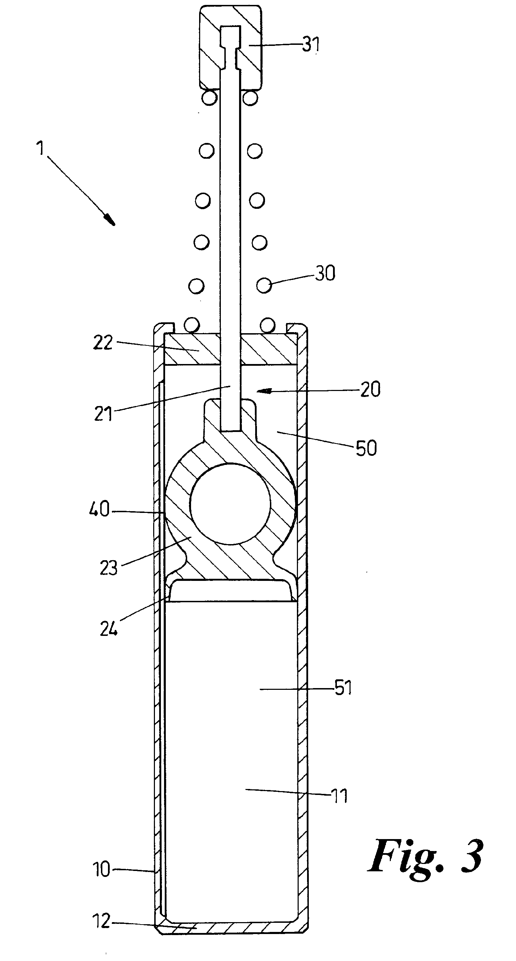

Referring to Figure 3, the damper assembly 10 is provided with a groove or like channel 40 extending axially internally relative to the bore. This groove replaces the or each vent hole of the embodiment described with reference to Figures 1 and 2.

The operation of the second embodiment is similar to that of the first embodiment, except that when a downward force is applied to the piston 20, air in the bore 11 of the cylinder 10 becomes compressed and escapes via the channel 40 to the part of the bore which is proximal to the piston rod 21. When the upward movement of the piston is commenced, the air in the part 50 of the bore is sucked back to the part 31 of the bore which is distal relative to the piston rod 21, by reduced pressure generated in the bore, which allows the piston 20 to return to is "rest" position.

## Claims

1. A damper assembly 1 characterised a cylinder 10 of uniform bore 11 adapted to receive a piston 20 in sealing engagement with the bore 11 and moveable axially of the bore 11, the piston 20 being provided with a piston-rod 21 and the piston-rod 21 being received in sealing engagement with a bush 22 acting to close one end of the bore 11, the opposite end of the bore 11 being permanently closed, the piston 20 being made from or comprising a resiliently-deformable material, the bore 11 being provided with one or more vents 13 and the assembly 1 further including means 30 to move the piston 20 in a direction axially opposed to a force applied thereto.

2. An assembly according to Claim 1, **characterised in that** the configuration of the piston 20 is such that, on inward movement relative to the bore 11, the piston 20 exhibits increased frictional engagement with the bore 11 and that, on outward movement relative to the bore 11, the piston 20 exhibits reduced frictional engagement with the bore 11.

3. An assembly according to Claim 2, **characterised in that** the piston 20 is of generally spherical, hemispherical or bell-shaped configuration.

4. An assembly according to Claim 2, **characterised in that** the piston 20 is of generally circular or annular section.

5. An assembly according to Claim 4, **characterised in that** the piston 20 comprises two generally annular portions maintained at substantially 90° to each other.

6. An assembly according to Claim 2, **characterised in that** the piston 20 is of generally Z-shaped section.

7. An assembly according to any one of Claims 1 to 6, **characterised in that** the bore 11 of the cylinder 10 is of circular, triangular, quadrilateral or hexagonal section.

8. An assembly according to any one of Claims 1 to 7, **characterised in that** the or each vent 13 comprises a hole extending radially relative to the bore 11 of the cylinder 10, the diameter of each vent hole 12 being in the range 0.2mmn to 2.0mm.

9. An assembly according to any one of Claims 1 to 7, **characterised in that** each vent 13 comprises an elongate groove or like channel, extending axially internally relative to the bore 11 and each vent groove 13 extends over substantially the whole length of the bore 11.

10. An assembly according to Claim 9, **characterised in that** the depth of each vent groove 13 is in the range 0.1mm to 0.8mm.

11. An assembly according to any one of Claims 1 to 10, **characterised in that** the piston 20 includes one or more lip portions 24 at its distal end relative to the piston rod 21, each lip portion 24 being adapted, in use, to sealingly engage the bore 11.

12. An assembly according to Claim 11, **characterised in that** each lip portion 24 is integral with the piston 20.

13. An assembly according to Claim 11, **characterised in that** each lip portion 24 is discrete from the piston 20.

14. An assembly according to any one of Claims 1 to 13, **characterised in that** the piston 20 consists substantially entirely of a resiliently-deformable material selected from thermoplastics elastomers, rubbers, rubber-like materials and polyurethanes.

15. An assembly according to any one of Claims 1 to 14, **characterised in that** the piston 20 comprises an outer layer of a resiliently-deformable material surrounding a core of a less-deformable material.

16. An assembly according to any one of Claims 1 to 15, **characterised in that** the means to move the piston 20 in the direction axially opposed to an applied force comprises one or more springs 30 or one or more pairs of contact magnets.
